# EUROPÄISCHE PATENTSCHRIFT

(11) **EP 2 078 136 B1**
(45) Veröffentlichungstag und Bekanntmachung des Hinweises auf die Patenterteilung: **26.09.2018**
(21) Anmeldenummer: 07818926.3
(22) Anmeldetag: 11.10.2007
(51) Int. Cl.: F01D 5/06, F02C 6/12

(54) **REIBGESCHWEISSTE TURBOLADERWELLE UND HERSTELLUNGSVERFAHREN DAFÜR**
TURBOCHARGER
TURBOCOMPRESSEUR

(30) Priorität: 13.10.2006 DE 102006048551
(43) Veröffentlichungstag der Anmeldung: 15.07.2009
(73) Patentinhaber: BorgWarner, Inc., Auburn Hills, MI 48326-2872 (US)
(72) Erfinder: RENETT, Michael, 67294 Oberwiesen (DE)
(74) Vertreter: Peterreins Schley
(86) Internationale Anmeldenummer: PCT/EP2007/008855
(87) Internationale Veröffentlichungsnummer: WO 2008/046556

(56) Entgegenhaltungen:
- EP-A- 1 002 935
- EP-A- 1 134 358
- EP-A- 1 243 754
- DE-A1- 4 413 101

## Beschreibung

Die Erfindung betrifft einen Turbolader gemäß dem Oberbegriff des Anspruches 1, eine Turbinenradanordnung eines Turboladers gemäß dem Oberbegriff des Anspruches 6 sowie ein Verfahren zur Herstellung einer derartigen Turbinenradanordnung gemäß Anspruch 8.

Ein gattungsgemäßer Turbolader ist aus der EP 1 357 255 A1 oder der EP 1 134 358 A2 bekannt.

Eine typische Turbinenradverbindung durch Reibschweißen des Rades mit der Welle ist z.B. in der DE 10 2005 015 947 B3 oder der EP 1 002 935 A1 beschrieben.

Ferner ist aus der EP 1 234 754 A2 ein Rotor für eine Turbomaschine sowie ein Verfahren zur Herstellung eines solchen Rotors bekannt, bei dem eine rissfreie Schweißverbindung dadurch erreicht wird, dass zur Verbindung der beiden Rotorabschnitte zwischen den beiden Rotorabschnitten ein pulver-metallurgisch erzeugter Übergangsbereich angeordnet ist.

Aus der DE 44 13 101 A1 ist ein innengelagerter Abgasturbolader bekannt, der ein Turbinenrad aufweist, das auf seiner Rückseite mit einem Wellenstummel versehen ist, welcher in eine Bohrung einer Welle eingreift. Die Welle ist mit dem Wellenstummel hierbei durch Rundkneten unlösbar verbunden.

Der bisherige Stand der Technik sieht dabei vor, dass die Durchmesser der beiden zu verbindenden Teile gleich groß sind und der durch die Verbindung entstehende Wulst außerhalb des Wellendurchmessers angeordnet ist und durch eine anschließende spanende Bearbeitung wieder komplett entfernt wird.

Es ist Aufgabe der vorliegenden Erfindung, einen Turbolader der im Oberbegriff des Anspruches 1 angegebenen Art zu schaffen, der eine Vereinfachung der Herstellbarkeit des Abgasturboladers bzw. seiner Turbinenradanordnung ermöglicht.

Die Lösung dieser Aufgabe erfolgt durch die Merkmale des Anspruchs 1, 6 bzw. 8.

Durch die erfindungsgemäße Ausbildung bzw. die Vorgehensweise des erfindungsgemäßen Verfahrens wird erreicht, dass ein Wellenzapfen der abgestuften Turboladerwelle einen kleineren Durchmesser als der größte Durchmesser der Welle aufweist. Dadurch ergibt sich der Vorteil, dass der Wulst, der durch den Schweißvorgang, vorzugsweise den Reibschweißvorgang, zur Verbindung von Turbinenrad und Zapfen, entsteht, nicht mehr bearbeitet werden muss.

Die Unteransprüche haben vorteilhafte Weiterbildungen der Erfindung zum Inhalt.

Weitere Einzelheiten, Vorteile und Merkmale der Erfindung ergeben sich aus nachfolgender Beschreibung eines Ausführungsbeispiels anhand der Zeichnung. Es zeigt:
- Fig. 1: eine geschnittene perspektivische Darstellung des grundsätzlichen Aufbaues eines erfindungsgemäßen Turboladers;
- Fig. 2: eine schematisch vereinfachte Darstellung der erfindungsgemäßen Turbinenradanordnung vor der Verbindung von Welle und Turbinenrad; und
- Fig. 3: eine der Fig. 2 entsprechende Darstellung der erfindungsgemäßen Turbinenradanordnung im Endmontagezustand.

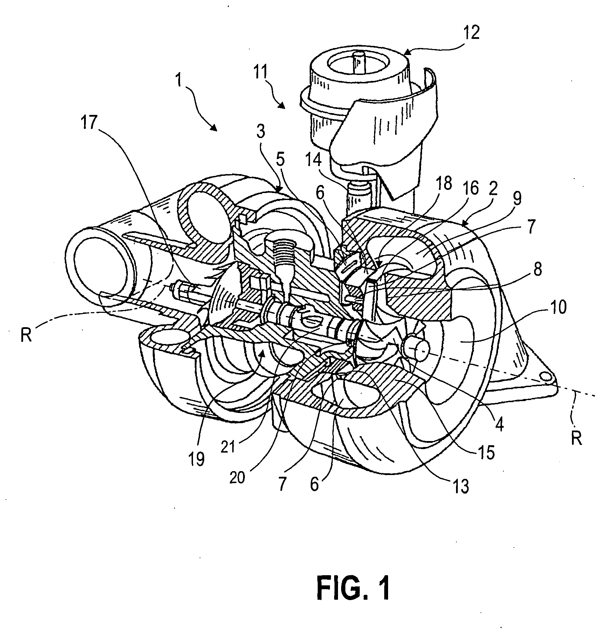

In Fig. 1 ist ein erfindungsgemäßer Turbolader 1 dargestellt, der ein Turbinengehäuse 2 und ein damit über ein Lagergehäuse 19 verbundenes Kompressorgehäuse 3 aufweist. Die Gehäuse 2, 3 und 19 sind entlang einer Rotationsachse R angeordnet. Das Turbinengehäuse 2 ist teilweise im Schnitt gezeigt, um die Anordnung eines Schaufellagerrings 6 als Teil eines radial äußeren Leitgitters 18 zu verdeutlichen, das eine Mehrzahl von über den Umfang verteilten Leitschaufeln 7 mit Schwenkachsen bzw. Schaufelwellen 8 aufweist. Hierdurch werden Düsenquerschnitte gebildet, die je nach der Lage der Leitschaufeln 7 größer oder kleiner sind und den in der Mitte an der Rotationsachse R gelagerten Turbinenrotor 4 mehr oder weniger mit dem über einen Zuführkanal 9 zugeführten und über einen Zentralstutzen 10 abgeführten Abgas eines Motors beaufschlagen, um über den Turbinenrotor 4 einen auf der selben Welle sitzenden Kompressorrotor 17 anzutreiben.

Um die Bewegung bzw. die Lage der Leitschaufeln 7 zu steuern, ist eine Betätigungseinrichtung 11 vorgesehen. Diese kann an sich beliebig ausgebildet sein, jedoch weist eine bevorzugte Ausführungsform ein Steuergehäuse 12 auf, das die Steuerbewegung eines an ihr befestigten Stößelgliedes 14 steuert, um dessen Bewegung auf einen hinter dem Schaufellagerring 6 gelegenen Verstellring 5 in eine leichte Drehbewegung desselben umzusetzen. Zwischen dem Schaufellagerring 6 und einem ringförmigen Teil 15 des Turbinengehäuses 2 wird ein Freiraum 13 für die Leitschaufeln 7 gebildet. Um diesen Freiraum 13 sichern zu können, weist der Schaufellagerring 6 einstückig geformte Abstandshalter 16 auf. Im Beispielsfalle sind drei Abstandshalter 16 in einem Winkelabstand von jeweils 120° am Umfang des Schaufellagerrings 6 angeordnet. Vom Prinzip her ist es jedoch möglich, mehr oder weniger derartige Abstandshalter 16 vorzusehen.

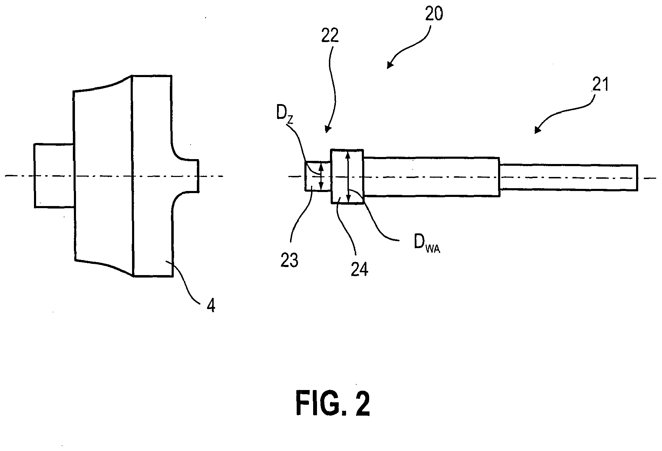

In Fig. 2 sind die noch nicht verbundenen Teile der Turbinenradanordnung 20 des in Fig. 1 dargestellten Abgasturboladers 1 schematisch vereinfacht im Detail dargestellt. Diese Turbinenradanordnung 20 weist neben dem bereits erwähnten Turbinenrad 4 und der Welle 21 einen Verbindungsabschnitt 22 auf, über den das Turbinenrad 4 mit der Welle 21 verbunden werden kann.

Der Verbindungsabschnitt 22 ist erfindungsgemäß mit einem Zapfen 23 versehen. Wie aus der Darstellung der Fig. 2 deutlich wird, hat der Verbindungszapfen 23 einen Durchmesser D_{Z}, der im dargestellten Beispielsfall maximal etwa 90 % eines Durchmessers D_{WA} eines Wellenabsatzes 24 beträgt.

Gemäß dem erfindungsgemäßen Verfahren wird zur Herstellung der in Fig. 2 dargestellten Turbinenradanordnung 20 zunächst das Turbinenrad 4, beispielsweise durch einen Gussvorgang, hergestellt. Hierfür können Titanaluminiumlegierungen oder auch eine Nickelbasislegierung verwendet werden.

Ferner wird die Welle 21 aus austenitischen, martensitischen oder hitzebeständigen Stählen oder auch aus Vergütungsstählen, wie z.B. 42CrMo4, sowie Nickelbasislegierungen, hergestellt. Hierbei wird der zuvor erläuterte Zapfen 23 mit dem Durchmesser D_{Z} versehen, der kleiner ist als der maximale Durchmesser der Welle 21, im dargestellten Beispielsfalle kleiner als der Durchmesser D_{WA} des Wellenabsatzes 24.

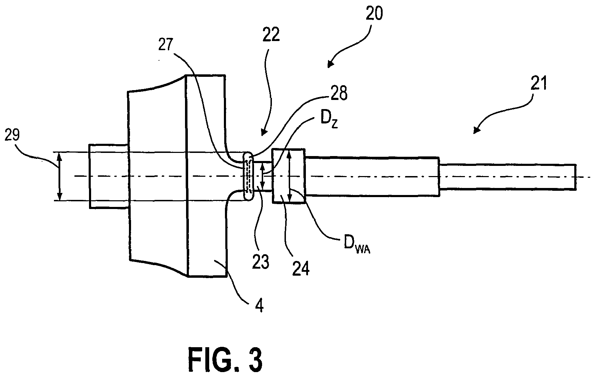

Zur Verbindung des Turbinenrades 4 und der Welle 21 wird ein Reibschweißvorgang, ausgeführt, bei dem die aus Fig. 3 ersichtliche Schweißnaht 27 und ein Wulst 28 entstehen. Hierbei ergibt sich aufgrund des gewählten Maßes für den Durchmesser D_{Z} des Zapfens 23 ein Wulstaußendurchmesser 29, der kleiner als der hier größte Wellendurchmesser D_{WA} der Welle 21 ist.

Durch geeignete Wahl des Zapfendurchmessers D_{Z} kann somit der Vorteil erreicht werden, dass der Wulst 28 nicht über den Wellendurchmesser übersteht und demzufolge nicht nachgearbeitet werden muss.

Das erfindungsgemäße Verfahren verwendet, wie gesagt, einen Reibschweißvorgang, bei dem die zuvor erläuterten Bauteile 4 und 21 entweder vorgewärmt werden oder die Reibschweißung auch ohne Vorwärmung der genannten Bauteile erfolgt.

### Bezugszeichenliste

- 1: Turbolader
- 2: Turbinengehäuse
- 3: Kompressorgehäuse
- 4: Turbinenrad
- 5: Verstellring
- 6: Schaufellagerring
- 7: Leitschaufeln
- 8: Schaufelwelle
- 9: Zuführkanal
- 10: Axialstutzen
- 11: Betätigungseinrichtung
- 12: Steuergehäuse
- 13: Freiraum für Leitschaufeln 7
- 14: Stößelglied
- 15: Ringförmiger Teil des Turbinengehäuses 2
- 16: Abstandshalter/Distanznocken
- 17: Kompressorrotor
- 18: Leitgitter/Leitapparat
- 19: Lagergehäuse
- 20: Turbinenradanordnung
- 21: Welle
- 22: Verbindungsabschnitt, vorzugsweise einstückig mit Welle 21 verbunden
- 23: Zapfen
- 24: Wellenabsatz
- 27: Schweißnaht, insbesondere Reibschweißnaht
- 28: Wulst
- 29: Wulstaußendurchmesser

## Patentansprüche

1. Abgasturbolader (1) mit einer Turbinenradanordnung (20), die aufweist:
- ein Turbinenrad (4), und
- eine Welle (21), die über einen Verbindungsabschnitt (22) mit dem Turbinenrad durch eine Schweißverbindung verbindbar ist, wobei der Verbindungsabschnitt (22) einen Zapfen (23) mit einem Durchmesser (D_{Z}) aufweist, der kleiner ist als der größte Durchmesser (D_{WA}) der Welle (21),
**dadurch gekennzeichnet,**
- **dass** die Schweißverbindung als Reibschweißverbindung ausgebildet ist, die einen Wulst (28) aufweist, der einen Wulstaußendurchmesser (29) umfasst, der kleiner ist als der größte Durchmesser (D_{WA}) der Welle (21).

2. Abgasturbolader nach Anspruch 1, **dadurch gekennzeichnet, dass** der Zapfen (23) des Verbindungsabschnitts (22) maximal etwa 90% des größten Durchmessers (D_{WA}) der Welle (21) beträgt.

3. Abgasturbolader nach Anspruch 1 oder 2, **dadurch gekennzeichnet, dass** das Material des Turbinenrades (4) eine TiAI-Legierung ist.

4. Abgasturbolader nach einem der Ansprüche 1 bis 3, **dadurch gekennzeichnet, dass** das Material des Turbinenrades (4) eine Nickelbasislegierung ist.

5. Abgasturbolader nach einem der Ansprüche 1 bis 4, **dadurch gekennzeichnet, dass** das Material der Welle (21) aus der Gruppe austenitischer Stähle, martensitischer Stähle, hitzebeständiger Stähle, Vergütungsstähle sowie Nickelbasislegierungen ausgewählt ist.

6. Turbinenradanordnung (20) eines Abgasturboladers (1)
- mit einem Turbinenrad (4), und
- mit einer Welle (21), die über einen Verbindungsabschnitt (22) mit dem Turbinenrad (4) verbindbar ist, wobei
der Verbindungsabschnitt (22) einen Zapfen (23) mit einem Durchmesser (D_{Z})aufweist, der kleiner ist als der größte Wellendurchmesser (D_{WA}) der Welle (21), **dadurch gekennzeichnet,**
- **dass** die Schweißverbindung als Reibschweißverbindung ausgebildet ist, die einen Wulst (28) aufweist, der einen Wulstaußendurchmesser (29) umfasst, der kleiner ist als der größte Durchmesser (D_{WA}) der Welle (21).

7. Turbinenradanordnung nach Anspruch 6, **gekennzeichnet durch** wenigstens eines der Merkmale der Ansprüche 2 bis 5.

8. Verfahren zur Herstellung einer ein Turbinenrad (4) und eine Welle (21) aufweisenden Turbinenradanordnung (20) eines Abgasturboladers (1) mit folgenden Verfahrensschritten:
- Herstellen des Turbinenrades (4),
- Herstellen der Welle (21) mit einem Verbindungsabschnitt (22), der einen Zapfen (23) aufweist, dessen Durchmesser (D_{Z}) kleiner ist als der größte Durchmesser (D_{WA}) der Welle (21), und
- Verbinden des Turbinenrades (4) und der Welle (21) durch einen Reibschweißvorgang, bei dem der Zapfen (23) am Turbinenrad (4) so angeschweißt wird, dass ein Wulst (28) entsteht, dessen Außendurchmesser (29) kleiner als der größte Durchmesser (D_{WA}) der Welle (21) ist.

9. Verfahren nach Anspruch 8, **dadurch gekennzeichnet, dass** das Turbinenrad (4) und die Welle (21) mit oder ohne Vorwärmen verschweißt werden.

## Claims

1. Exhaust gas turbocharger (1) with a turbine wheel arrangement (20), comprising:
- a turbine wheel (4) and
- a shaft (21) which is connectable to the turbine wheel (4) by way of a welded connection via a connecting portion (22), wherein the connecting portion (22) comprises a journal (23) with a diameter (DZ) which is smaller than the largest diameter (DWA) of the shaft (21),
**characterized**
- **in that** the welded connection is in the form of a friction welded connection, which comprises a bead (28) having a bead outside diameter (29) which is smaller than the largest diameter (DWA) of the shaft (21).

2. Exhaust gas turbocharger according to Claim 1, **characterized in that** the journal (23) of the connecting portion (22) amounts at most to about 90% of the largest diameter (DWA) of the shaft (21).

3. Exhaust gas turbocharger according to Claim 1 or 2, **characterized in that** the material of the turbine wheel (4) is a TiAl alloy.

4. Exhaust gas turbocharger according to one of Claims 1 to 3, **characterized in that** the material of the turbine wheel (4) is a nickel-based alloy.

5. Exhaust gas turbocharger according to one of Claims 1 to 4, **characterized in that** the material of the shaft (21) is selected from the group of austenitic steels, martensitic steels, heat-resistant steels, tempering steels and nickel-based alloys.

6. Turbine wheel arrangement (20) of an exhaust gas turbocharger (1),
- with a turbine wheel (4) and
- with a shaft (21) which is connectable to the turbine wheel (4) via a connecting portion (22), wherein the connecting portion (22) comprises a journal (23) with a diameter (DZ) which is smaller than the largest shaft diameter (DWA) of the shaft (21),
**characterized**
- **in that** the welded connection is in the form of a friction welded connection, which comprises a bead (28) having a bead outside diameter (29) which is smaller than the largest diameter (DWA) of the shaft (21).

7. Turbine wheel arrangement according to Claim 6, **characterized by** at least one of the features of Claims 2 to 5.

8. Method for producing a turbine wheel arrangement (20) comprising a turbine wheel (4) and a shaft (21) of an exhaust gas turbocharger (1) with the following method steps:
- production of the turbine wheel (4),
- production of the shaft (21) with a connecting portion (22) comprising has a journal (23), the diameter (DZ) of which is smaller than the largest diameter (DWA) of the shaft (21), and
- connection of the turbine wheel (4) and of the shaft (21) by means of a friction welding operation in which the journal (23) is welded to the turbine wheel (4) in such a way that a bead (28) is formed, the outside diameter (29) of which is smaller than the largest diameter (DWA) of the shaft (21).

9. Method according to Claim 8, **characterized in that** the turbine wheel (4) and the shaft (21) are welded together with or without preheating.

## Revendications

1. Turbocompresseur à gaz d'échappement (1) avec un agencement de roue de turbine (20), qui présente:
- une roue de turbine (4), et
- un arbre (21), qui peut être assemblé par une partie d'assemblage (22) à la roue de turbine par un assemblage soudé, dans lequel la partie d'assemblage (22) présente un tourillon (23) avec un diamètre (DZ), qui est plus petit que le plus grand diamètre (DWA) de l'arbre (21),
**caractérisé en ce que** l'assemblage soudé est un assemblage soudé par friction, qui présente un bourrelet (28), qui comprend un diamètre extérieur de bourrelet (29), qui est plus petit que le plus grand diamètre (DWA) de l'arbre (21).

2. Turbocompresseur à gaz d'échappement selon la revendication 1, **caractérisé en ce que** le tourillon (23) de la partie d'assemblage (22) vaut au maximum 90 % du plus grand diamètre (DWA) de l'arbre (21).

3. Turbocompresseur à gaz d'échappement selon la revendication 1 ou 2, **caractérisé en ce que** le matériau de la roue de turbine (4) est un alliage TiAl.

4. Turbocompresseur à gaz d'échappement selon l'une quelconque des revendications 1 à 3, **caractérisé en ce que** le matériau de la roue de turbine (4) est un alliage à base de nickel.

5. Turbocompresseur à gaz d'échappement selon l'une quelconque des revendications 1 à 4, **caractérisé en ce que** le matériau de l'arbre (21) est sélectionné dans le groupe des aciers austénitiques, des aciers martensitiques, des aciers réfractaires, de aciers de traitement ainsi que des alliages à base de nickel.

6. Agencement de roue de turbine (20) d'un turbocompresseur à gaz d'échappement (1),
- avec une roue de turbine (4), et
- avec un arbre (21), qui peut être assemblé par une partie d'assemblage (22) à la roue de turbine (4), dans lequel la partie d'assemblage (22) présente un tourillon (23) avec un diamètre (DZ), qui est plus petit que le plus grand diamètre d'arbre (DWA) de l'arbre (21),
**caractérisé en ce que**
- l'assemblage soudé est un assemblage soudé par friction, qui présente un bourrelet (28), qui comprend un diamètre extérieur de bourrelet (29), qui est plus petit que le plus grand diamètre (DWA) de l'arbre (21).

7. Agencement de roue de turbine selon la revendication 6, **caractérisé par** au moins une des caractéristiques des revendications 2 à 5.

8. Procédé de fabrication d'un agencement de turbine (20) présentant une roue de turbine (4) et un arbre (21) d'un turbocompresseur à gaz d'échappement (1) comprenant les étapes suivantes:
- fabriquer la roue de turbine (4),
- fabriquer l'arbre (21) avec une partie d'assemblage (22), qui présente un tourillon (23), dont le diamètre (DZ) est plus petit que le plus grand diamètre (DWA) de l'arbre (21), et
- assembler la roue de turbine (4) et l'arbre (21) par une opération de soudage par friction, dans laquelle le tourillon (23) est soudé sur la roue (4) de telle manière qu'il se forme un bourrelet (28), dont le diamètre extérieur (29) est plus petit que le plus grand diamètre (DWA) de l'arbre (21).

9. Procédé selon la revendication 8, **caractérisé en ce que** l'on soude la roue de turbine (4) et l'arbre (21) avec ou sans préchauffage.
